Europäisches Patentamt

European Patent Office

Office européen des brevets

(19)

(11) **EP 0 657 714 B1**

(12)
# FASCICULE DE BREVET EUROPEEN

(45) Date de publication et mention
de la délivrance du brevet:
**04.08.1999 Bulletin 1999/31**

(51) Int Cl.6: **G01B 11/10**, G01B 11/02,
G01B 11/24

(21) Numéro de dépôt: **94870188.3**

(22) Date de dépôt: **02.12.1994**

(54) **Procédé et dispositif pour mesurer le profil du flanc d'une bobine de bande**

Verfahren und Vorrichtung zur Messung des Seitenprofils eines Bandringes

Method and device for measuring the side profile of a coil

(84) Etats contractants désignés:
**BE DE FR GB IT NL**

(30) Priorité: **06.12.1993 BE 9301342**

(43) Date de publication de la demande:
**14.06.1995 Bulletin 1995/24**

(73) Titulaire: **CENTRE DE RECHERCHES
METALLURGIQUES
CENTRUM VOOR RESEARCH IN DE
METALLURGIE Assoc. sans but lucratif Ver,
zonder winstoogmerk
B-1040 Bruxelles (BE)**

(72) Inventeurs:
• **Franssen, Roger
  B-4850 Montzen (BE)**
• **Pirlet, Robert
  B-4053 Embourg (BE)**

(56) Documents cités:
**EP-A- 0 492 723        EP-A- 0 509 809
EP-A- 0 547 365        EP-A- 0 559 120**

## Description

La présente invention concerne un procédé pour mesurer le profil du flanc d'une bobine de bande, en particulier d'une bobine de bande métallique. Elle porte également sur un dispositif pour la mise en oeuvre de ce procédé.

La description qui suit fera plus spécialement référence à une bobine de bande d'acier. Il va de soi cependant que l'invention s'applique non seulement aux bandes d'acier, laminées tant à chaud qu'à froid, mais aussi à des bandes d'autres matières telles que du carton ou des matières plastiques.

On sait qu'une bande d'acier quittant un train de laminoir est enroulée en une bobine dont l'axe est habituellement horizontal.

La bobine est ensuite transférée par un convoyeur vers un poste de conditionnement, par exemple un poste de cerclage ou d'emballage, en vue de son expédition. Pour ce transfert, la bobine est généralement basculée de 90 degrés et déposée sur le flanc, avec son axe vertical, sur le convoyeur au moyen d'un dispositif approprié appelé chaise de basculement.

En principe, la bande présente une largeur constante et, au bobinage, elle devrait former des spires qui se superposent parfaitement de manière à produire une bobine dont le flanc présente un profil plat.

On constate cependant, dans la pratique, que le bobinage de la bande est parfois sujet à certaines perturbations qui se traduisent par des positions irrégulières de certaines spires de la bobine. Un flanc de bobine peut ainsi présenter un relief irrégulier, formé par les rives de spires saillantes et de spires rentrantes ou même de spires non jointives par manque de régularité dans le serrage. A cela peuvent aussi s'ajouter des variations plus ou moins importantes de la largeur de la bande.

Outre qu'elle est susceptible de nuire à la réputation du producteur de la bande, une telle situation peut donner lieu à divers inconvénients économiques et techniques. Les parties saillantes des spires peuvent être endommagées, par exemple repliées ou écrasées, pendant le transfert sur le convoyeur ou au cours du transport entre les installations de production et d'utilisation. La bande peut alors présenter des difficultés de déroulement ou même être inutilisable pour l'application envisagée.

On connaît, par la publication EP-A3- 0 547 365, un procédé et un dispositif pour mesurer des paramètres de pneumatiques. Selon ce document, on dirige un faisceau optique vers le flanc d'un pneumatique, et on balaye ledit flanc pour y déceler les irrégularités.

Une autre publication, EP-A-0 492 723, décrit un dispositif pour mesurer par voie optique la hauteur d'une surface d'un objet le long d'un axe, notamment pour vérifier si la surface présente le profil désiré.

La présente invention a pour objet un procédé pour mesurer le profil du flanc d'uine bobine de bande, qui permet d'apprécier l'importance de ce relief et de déterminer la qualité du bobinage de la bande.

Conformément à la présente invention, un procédé pour mesurer le profil du flanc d'une bobine de bande, dans lequel on dirige un faisceau optique incident vers le flanc de ladite bobine, on crée un mouvement relatif entre la bobine et ledit faisceau optique afin que ledit faisceau optique incident balaie ledit flanc de la bobine suivant un diamètre. et on mesure la distance entre une pluralité de points dudit flanc répartis suivant ledit diamètre et une position de référence prédéterminée choisie le long dudit faisceau, est caractérisé en ce que l'axe optique du faisceau incident et l'axe optique du faisceau réfléchi constituent une triangulation et en ce que le plan de cette triangulation est perpendiculaire à la direction de balayage.

Il convient de préciser qu'au sens de la présente demande, le terme "balayage" signifie simplement que le faisceau optique décrit une trajectoire déterminée sur le flanc de la bobine, par suite du mouvement relatif créé entre ledit faisceau et la bobine, mais sans imposer le choix de l'élément mobile dans ce mouvement relatif.

Pour obtenir une image représentative dudit profil, il est préférable que la trace dudit balayage soit au moins tangente, et de préférence coupe l'oeil de la bobine, c'est-à-dire le vide central subsistant après le retrait du mandrin de bobinage.

Suivant une caractéristique particulière, on balaye ledit flanc suivant une direction diamétrale de la bobine et on mesure la distance entre une pluralité de points dudit diamètre et ladite position de référence prédéterminée.

Le mouvement relatif assurant ledit balayage est avantageusement un mouvement de translation entre la bobine de bande et le dispositif de mesure. Il s'est ainsi avéré intéressant de faire défiler la bobine de bande devant un dispositif de mesure fixe, qui peut constituer ladite position de référence. On évite ainsi le risque d'erreurs de mesure dues à des variations du positionnement du dispositif de mesure ou à une déformation éventuelle de ce dispositif de mesure ou de sa trajectoire.

Habituellement, les bobines sont déposées sur les convoyeurs avec leur axe vertical. Le dispositif de mesure sera dès lors disposé soit au-dessus du convoyeur, soit sous celui-ci, de façon à scruter le flanc de la bobine suivant une direction parallèle au sens de déplacement de la bobine. Le placement du dispositif de mesure sous le convoyeur est particulièrement avantageux, car cette position n'est pas affectée par la largeur de la bobine. Le dispositif de mesure est de préférence disposé dans l'axe du convoyeur, de façon à scruter le flanc de la bobine le long du diamètre orienté suivant la direction de déplacement de la bobine.

Dans le cadre de la présente invention, la mesure du profil dudit flanc peut être effectuée par toute technique appropriée, connue en soi.

Selon la mise en oeuvre, le profil du flanc de la bobine est relevé par une méthode de triangulation optique. Le plan de cette triangulation, c'est-à-dire le plan formé par l'axe optique du faisceau incident et l'axe optique du faisceau réfléchi, est perpendiculaire à la direction de déplacement de la bobine; cette disposition permet d'effectuer des mesures sur le chant de spires se trouvant en retrait par rapport aux spires voisines, sans subir de perturbations dues à ces dernières.

De plus, le faisceau incident de cette triangulation est avantageusement parallèle à l'axe de la bobine, tandis que l'axe optique du récepteur du faisceau réfléchi est incliné par rapport à l'axe de la bobine. On assure ainsi que toutes les mesures sont effectuées dans un même plan parallèle à l'axe de la bobine, quelles que soient les variations du profil dans une direction parallèle à l'axe de la bobine.

De préférence, ledit faisceau incident est en plus situé dans le plan diamétral de la bobine, parallèle au sens de déplacement de la bobine; de cette manière, on relève le profil du flanc de la bobine suivant le diamètre parallèle au sens de déplacement de la bobine.

Selon une caractéristique supplémentaire du procédé de l'invention, on effectue au moins deux, et de préférence au moins trois mesures de distance sur chaque spire de la bobine. Le chant de chaque spire comporte ainsi au moins deux, et de préférence au moins trois des points de mesure répartis suivant ladite direction prédéterminée de balayage du flanc de la bobine.

Il en résulte que la cadence de mesure doit être adaptée d'une part à la vitesse de déplacement de la bobine et d'autre part à l'épaisseur minimale des spires de cette bobine. La cadence de mesure peut ainsi être exprimée par la relation

$$f \geq 2\, v/e$$

et de préférence par

$$f \geq 3\, v/e$$

où

> $f$ est la cadence de mesure, en mesures par seconde
> $v$ est la vitesse relative de déplacement de la bobine, en m/s
> $e$ est l'épaisseur de la bande, en m.

A cet effet, la dimension du champ instantané de mesure dans la direction de balayage du flanc est inférieure à la moitié, et de préférence au tiers, de l'épaisseur minimale des spires dans la direction du balayage. Chaque spire pourra donc être identifiée clairement et il sera possible de compenser l'effet d'une courbure de la surface du chant des spires.

Dans le cas préféré d'un balayage diamétral, le chant de chaque spire est balayé suivant l'épaisseur réelle de la bande, qui est sensiblement la même pour toutes les spires.

On a considéré jusqu'ici que la bobine de bande se déplaçait parallèlement à elle-même, par exemple sur un convoyeur, et que son axe était lui-même parallèle à l'axe du faisceau incident, essentiellement fixe.

Il peut cependant arriver pour différentes raisons, par exemple par suite d'une usure ou d'un jeu dans le convoyeur, que l'axe de la bobine présente une obliquité par rapport à l'axe du faisceau optique incident. Dans le cas le plus fréquent où la bobine est posée sur le flanc avec son axe théoriquement vertical, cette obliquité traduit un défaut d'horizontalité soit du convoyeur, soit du flanc de la bobine. L'axe de la bobine est alors incliné par rapport à la verticale, d'un angle qui correspond à ce défaut d'horizontalité.

Une telle position incorrecte de la bobine peut entraîner une erreur de mesure, qui peut être du même ordre de grandeur que la mesure elle-même.

Grâce à une caractéristique particulière, le procédé de la présente invention permet de corriger une telle erreur de mesure, en pratiquant les opérations suivantes :

> a) on effectue un relevé du profil du flanc de la bobine sur un diamètre complet de celle-ci;
> b) on relève la position de chaque point de mesure le long dudit diamètre, par rapport à une origine prédéterminée;
> c) à partir du couple de mesures obtenu en chaque point, à savoir la position **p** du point et la hauteur **h** du profil en ce point, on calcule la pente moyenne de la courbe du profil le long du diamètre de balayage:
> d) on corrige le profil mesuré au moyen de la pente moyenne calculée le long du diamètre de balayage; et
> e) on détermine un profil diamètral dont la pente moyenne est nulle.

Ce profil corrigé correspond au profil du flanc de la bobine, dont on a compensé le défaut d'horizontalité.

De façon connue en soi, la mesure de la position de chaque point de mesure le long du diamètre de la bobine peut se faire par toute méthode appropriée. Dans le cadre de la présente invention, il a été trouvé intéressant de mesurer la position de ces points par l'une des méthodes suivantes.

Selon une première méthode, on mesure la vitesse de déplacement de la bobine et on intègre le signal de vitesse à partir d'une origine des temps fixée, par exemple, par l'intermédiaire d'un contact extérieur annonçant l'arrivée d'une bobine.

Une seconde méthode, applicable lorsque la vitesse de déplacement de la bobine est connue et constante, consiste à mesurer le temps écoulé à partir d'une origine prédéterminée. Cette mesure de temps peut être effectuée par une horloge interne au calculateur de traitement.

Considérant la cadence de mesure très élevée qui a été indiquée plus haut, la représentation du profil du flanc de la bobine se compose d'un très grand nombre de points, qu'il n'est pas possible de faire apparaître distinctement sur un écran de visualisation de dimensions classiques.

A titre d'exemple, une bobine de 2 m de diamètre se déplaçant à une vitesse de 1 m/s avec une cadence de mesure de 2000 points par seconde nécessiterait 4000 points pour représenter son profil diamétral.

Suivant une caractéristique supplémentaire, le procédé de l'invention permet de remédier à cet inconvénient, par le fait que l'on détermine le nombre m de points de mesure constituant le profil du flanc de la bobine relevé suivant ladite direction prédéterminée, de préférence le long dudit diamètre, on divise ledit profil du flanc de la bobine en **n** sections de longueur égale, avec n < m, on détermine pour chaque section les valeurs maximale $h_{max}$ et minimale $h_{min}$ de la hauteur **h** du profil aux points de mesure compris dans cette section, et on trace pour chaque section un rectangle dont la largeur est représentative de la largeur de la section et qui est délimité verticalement par les valeurs $h_{max}$ et $h_{min}$ correspondant à ladite section.

On obtient ainsi une représentation comprimée du profil, sans perte importante d'informations.

Pour la représentation du profil sur un écran de visualisation, il est intéressant de choisir un nombre **n** de sections égal au nombre de points qu'il est possible d'afficher sur ledit écran.

Une représentation particulièrement expressive est obtenue en disposant les **n** sections suivant l'axe des abscisses du diagramme et en portant en ordonnées les valeurs des hauteurs **h**. Une commutation d'échelle permet d'améliorer la visualisation des rectangles représentant le profil.

Diverses caractéristiques supplémentaires du procédé de l'invention permettent de détecter des anomalies dans le profil du flanc de la bobine, telles que le commencement ou la fin de la bobine ou encore la présence de spires non jointives.

On sait que, quel que soit le type de détection utilisé, le spot formé sur la cible par le faisceau optique produit, dans le circuit de réception, un signal électrique dont le niveau est représentatif de l'intensité du faisceau réfléchi par la cible dans la direction du récepteur.

En l'absence de cible, le circuit de réception produit néanmoins un signal, généralement appelé bruit de fond, qui constitue un seuil sous lequel les signaux sont, pour la mesure, considérés comme ayant une intensité nulle.

Dans ces conditions, l'entrée d'une bobine dans le champ de mesure, c'est-à-dire le début du relevé d'un profil, se traduit par le passage d'une zone d'intensité nulle à une zone d'intensité non nulle dudit signal.

A l'inverse, la sortie d'une bobine du champ de mesure, c'est-à-dire la fin du relevé d'un profil, est marquée par le passage d'une zone d'intensité non nulle à une zone d'intensité nulle.

Dans les deux cas, ce passage se traduit par une variation brusque et importante du niveau du signal représentatif du profil et un maintien prolongé du niveau modifié de ce signal.

La situation est différente dans le cas de spires voisines non jointives en rive. Ici, le faisceau incident plonge dans l'interstice existant entre deux spires, et le spot ne se forme pas sur le chant des spires, mais sur les faces des deux spires successives. La réflexion du faisceau est plus diffuse dans cette zone et le circuit de réception produit alors un signal de moindre intensité pendant une durée limitée. Dès qu'il a franchi la zone des spires non jointives, le spot revient sur le chant de la spire suivante et le signal électrique retrouve une intensité correspondante.

Dans le profil représenté par le signal de réception, la présence de spires non jointives se traduit par une diminution brusque de l'intensité du signal, limitée à un petit nombre de points de mesure successifs, jusqu'à un niveau qui est cependant généralement supérieur au seuil d'intensité nulle, suivie par une augmentation également brusque de l'intensité du signal.

Le nombre de points de mesure affectés par cette variation de l'intensité du signal dépend d'une part de la cadence de mesure et d'autre part de l'importance de l'interstice entre les deux spires non jointives.

Par exemple, si le nombre de mesures par spire **r** est supérieur ou égal à 3, et que **s** points, avec s < r/2, présentent une augmentation de la distance mesurée de plus de **t** mm dans le sens de l'axe de la bobine, par rapport aux mesures immédiatement précédentes et suivantes, le profil présentera en cet endroit une vallée traduisant la présence de spires non jointives. Les valeurs de **r**, **s** et **t** sont fixées dans chaque cas, en tenant compte des conditions particulières relatives à chaque bobine ou à chaque type de bobine. Pour l'établissement du profil apparent de la bobine, ces mesures peuvent être écartées car la présence de spires légèrement non jointives ne dégrade pas l'aspect régulier du profil du flanc de la bobine.

De telles mesures pourraient cependant être le signe d'une irrégularité de bobinage, en particulier si elles se répètent un nombre de fois supérieur à **r/2**.

Un dispositif pour la mise en oeuvre du procédé de l'invention comporte un appareil émetteur d'un faisceau optique en direction du flanc de la bobine, et de préférence parallèlement à l'axe de celle-ci, un appareil récepteur du faisceau optique réfléchi par ledit flanc de la bobine, l'axe du faisceau optique incident et l'axe du faisceau optique réfléchi constituant une triangulation; il est en outre prévu des moyens pour créer un mouvement relatif entre ledit faisceau optique et la bobine suivant une direction parallèle à un diamètre du flanc de la bobine, le plan de ladite triangulation étant perpendiculaire à la direction dudit diamètre de la bobine, ainsi que des moyens pour transformer ledit faisceau optique réfléchi en un signal électrique représentatif de la distance entre les points de mesure sur ledit flanc de la bobine et un point de référence prédéterminé.

L'appareil émetteur et l'appareil récepteur précités sont de préférence disposés à poste fixe, à proximité d'une trajectoire décrite par ladite bobine en mouvement de translation.

Il est particulièrement intéressant que l'appareil émetteur soit disposé avec son axe d'émission situé dans le plan diamétral de la bobine orienté dans le sens du déplacement de celle-ci. De cette manière, chaque spire de la bobine est balayée radialement par le faisceau optique incident et présente ainsi une longueur de balayage constante et égale à l'épaisseur de la bande.

Selon une disposition particulière, l'appareil émetteur et éventuellement l'appareil récepteur, est installé sous le convoyeur de transport des bobines, et dans l'axe de celui-ci pour balayer les bobines suivant leur plan diamétral longitudinal.

L'invention n'est pas limitée aux variantes qui viennent d'être décrites. Elle s'étend également à toute modification apportée par un homme de métier, par exemple au relevé du profil des deux flancs d'une bobine suivant une même direction ou des directions différentes.

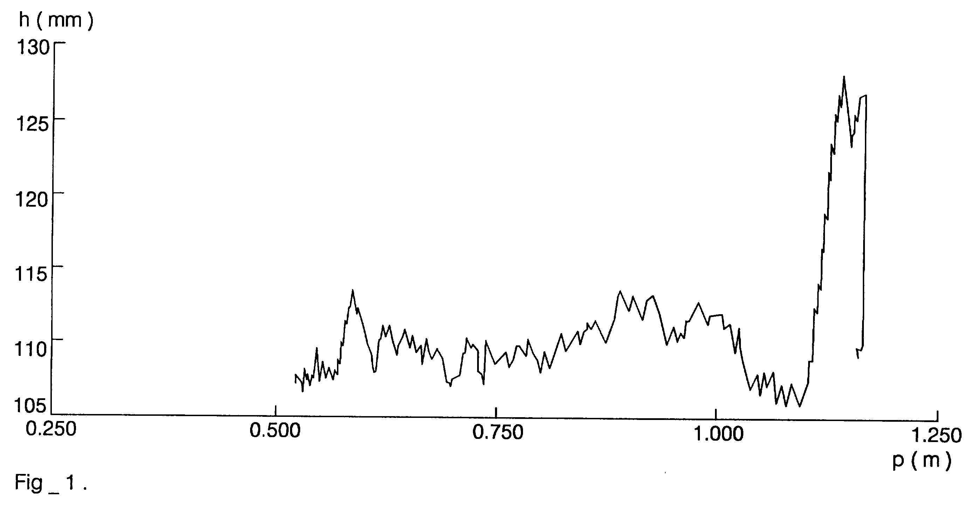

La figure 1 ci-annexée illustre le résultat de mesures réalisées en mettant en oeuvre le procédé de l'invention; on a utilisé pour ce faire une jauge dans laquelle le faisceau lumineux est fourni par une diode laser à faisceau collimaté tandis que le détecteur de position est une caméra linéaire à réseau de détecteurs.

La jauge a été installée sous le convoyeur à bobines, en amont de la ligatureuse; la face supérieure, refroidie par circulation d'eau, est munie de deux hublots protégés par un obturateur ayant une fonction de protection des hublots et d'interception du faisceau laser en l'absence de bobine. La propreté des hublots est maintenue par un dispositif de soufflage d'air comprimé.

La gamme de mesure de la jauge est légèrement supérieure à 110 mm pour une distance entre la plaque frontale de la jauge et le centre de la gamme de l'ordre de 150 mm. La précision est, pour une caméra à 512 pixels, meilleure que ± 0,25 %. Pour permettre la détection de chaque spire de la bobine, y compris les épaisseurs de bande les plus faibles, le faisceau laser a été focalisé dans le champ de mesure, afin de réduire la taille du spot lumineux.

Lors du passage d'une bobine, des mesures sont effectuées le long du diamètre du flanc inférieur, coïncidant avec l'axe du convoyeur, à la cadence d'environ 2000 mesures par seconde. Une résolution spatiale de l'ordre de 0,35 mm est ainsi obtenue.

Dès la fin du passage de la bobine, les données sont traitées par un PC industriel. Ce PC et ses diverses interfaces sont montés dans une armoire étanche refroidie par un groupe frigorifique. Les résultats des mesures sont visualisés simultanément au moyen de moniteurs placés respectivement dans cette armoire et dans la salle de contrôle des bobineuses.

Le profil relevé le long d'un diamètre est obtenu en portant, en abscisse, les positions p des points de mesure le long du diamètre de la bobine (en m) et, en ordonnée, les distances verticales h des points relevés sur le flanc (exprimées en mm par rapport à un point de référence lié à la jauge).

L'exemple du profil détaillé, relevé le long d'un rayon, met en évidence l'excellente résolution du système de mesure, puisque le profil du chant de chaque spire est aisément observable. Des défauts de serrage apparaissent également aussi bien pour les spires extérieures de la bobine (à gauche du diagramme) que pour les spires localisées à proximité de l'oeil (à droite du diagramme). Ces défauts se caractérisent par l'absence de plusieurs mesures successives (discontinuité du profil).

## Revendications

1. Procédé pour mesurer le profil du flanc d'une bobine de bande, dans lequel on dirige un faisceau optique incident vers le flanc de ladite bobine, on crée un mouvement relatif entre la bobine et ledit faisceau optique afin que ledit faisceau optique incident balaie ledit flanc de la bobine suivant un diamètre, et on mesure la distance entre une pluralité de points dudit flanc répartis suivant ledit diamètre et une position de référence prédéterminée choisie le long dudit faisceau, caractérisé en ce que l'axe optique du faisceau incident et l'axe optique du faisceau réfléchi constituent une triangulation et en ce que le plan de cette triangulation est perpendiculaire à la direction de balayage.

2. Procédé suivant la revendication 1, caractérisé en ce que l'on dirige vers le flanc de la bobine un faisceau optique incident parallèle à l'axe de ladite bobine.

3. Procédé suivant l'une ou l'autre des revendications 1 et 2, caractérisé en ce que l'on effectue au moins deux mesures de distance sur le chant de chaque spire de ladite bobine.

4. Procédé suivant l'une ou l'autre des revendications 1 à 3, caractérisé en ce que l'on corrige un défaut de parallélisme entre l'axe de la bobine et l'axe du faisceau optique incident en pratiquant les opérations suivantes:

   a) on effectue un relevé du profil du flanc de la bobine sur un diamètre complet de celle-ci;
   b) on relève la position de chaque point de mesure le long dudit diamètre, par rapport à une origine prédéterminée;

c) à partir du couple de mesures obtenu en chaque point, à savoir la position p du point et la hauteur h du profil en ce point, on calcule la pente moyenne de la courbe du profil le long du diamètre de balayage:

d) on corrige le profil mesuré au moyen de la pente moyenne calculée le long du diamètre de balayage; et

e) on détermine un profil diamétral dont la pente moyenne est nulle.

5. Procédé suivant l'une ou l'autre des revendications 1 à 4, caractérisé en ce que l'on détermine le nombre (m) de points de mesure constituant le profil du flanc de la bobine relevé suivant ladite direction prédéterminée, en ce que l'on divise ledit profil du flanc de la bobine en (n) sections de longueur égale, avec n < m, en ce que l'on détermine pour chaque section des valeurs maximale ($h_{max}$) et minimale ($h_{min}$) de la hauteur h du profil aux points de mesure compris dans cette section, et en ce que l'on trace pour chaque section un rectangle dont la largeur est représentative de la longueur de la section et qui est délimité verticalement par les valeurs ($h_{max}$) et ($h_{min}$) correspondant à ladite section.

6. Procédé suivant l'une ou l'autre des revendications 1 à 5, caractérisé en ce que l'on détermine le seuil d'intensité nulle du système de réception et en ce que l'on détecte le début, respectivement la fin de la mesure dudit profil correspondant à des variations brusques du niveau du signal de réception, respectivement une augmentation du signal à partir dudit seuil d'intensité nulle et une diminution du signal jusqu'audit seuil d'intensité nulle.

7. Procédé suivant l'une ou l'autre des revendications 1 à 6, caractérisé en ce que l'on détecte les augmentations d'au moins t mm de la distance mesurée du profil et en ce que l'on détermine la présence de spires non jointives dans ladite bobine lorsqu'au moins une desdites augmentations d'au moins t mm se répète en un nombre s de points successifs du profil, inférieur à la moitié du nombre r de points de mesure par spire.

8. Dispositif pour la mise en oeuvre d'un procédé suivant l'une ou l'autre des revendications précédentes, caractérisé en ce qu'il comporte un appareil émetteur d'un faisceau optique en direction du flanc de la bobine, et de préférence parallèlement à l'axe de celle-ci, et un appareil récepteur du faisceau optique réfléchi par ledit flanc de la bobine, en ce que l'axe du faisceau optique incident et l'axe du faisceau optique réfléchi forment une triangulation, en ce qu'il est prévu des moyens pour créer un mouvement relatif entre ledit faisceau optique et la bobine suivant une direction parallèle à un diamètre du flanc de la bobine, en ce que le plan de ladite triangulation est perpendiculaire à la direction dudit diamètre, et en ce qu'il comporte des moyens pour transformer ledit faisceau optique réfléchi en un signal électrique représentatif de la distance entre les points de mesure sur ledit flanc de la bobine et un point de référence prédéterminé.

9. Dispositif suivant la revendication 8, caractérisé en ce que ledit appareil émetteur est disposé avec son axe d'émission situé dans le plan diamétral de la bobine orienté dans le sens de déplacement de celle-ci.

**Patentansprüche**

1. Verfahren zur Messung des Profils der Seite einer Bandspule, bei dem man einen einfallenden optischen Strahl auf die Seite der Spule lenkt, eine Relativbewegung zwischen der Spule und dem optischen Strahl erzeugt, damit der einfallende optische Strahl die Spulenseite entlang einem Durchmesser abtastet, und den Abstand zwischen mehreren entlang dem Durchmesser verteilten Punkten der Seite und einer vorbestimmten Bezugsstelle, die längs des Strahls gewählt ist, mißt, dadurch gekennzeichnet, daß die optische Achse des einfallenden Strahls und die optische Achse des reflektierten Strahls eine Triangulation bilden und daß die Ebene dieser Triangulation senkrecht zur Abtastrichtung verläuft.

2. Verfahren nach Anspruch 1, dadurch gekennzeichnet, daß man einen parallel zur Spulenachse verlaufenden, einfallenden optischen Strahl auf die Spulenseite lenkt.

3. Verfahren nach Anspruch 1 oder 2, dadurch gekennzeichnet, daß man mindestens zwei Abstandsmessungen an der Kante jeder Windung der Spule durchführt.

4. Verfahren nach einem der Ansprüche 1 bis 3, dadurch gekennzeichnet, daß man einen Parallelitätsfehler zwischen der Spulenachse und der Achse des einfallenden optischen Strahls korrigiert, indem man die folgenden Schritte durchführt:

a) man nimmt das Profil der Spulenseite über einen gesamten Durchmesser von ihr auf;

b) man nimmt die Position jedes Meßpunktes längs des Durchmessers bezüglich eines vorbestimmten Ausgangspunktes auf;

c) man berechnet ausgehend von den zwei an jedem Punkt erhaltenen Messungen, nämlich der Stelle p des Punktes und der Höhe h des Profils an diesem Punkt, die mittlere Steigung der Krümmung des Profils längs des Abtastdurchmessers;

d) man korrigiert das gemessene Profil mittels der längs des Abtastdurchmessers berechneten mittleren Steigung; und

e) man bestimmt ein Durchmesserprofil, dessen mittlere Steigung Null ist.

5. Verfahren nach einem der Ansprüche 1 bis 4, dadurch gekennzeichnet, daß man die Anzahl (m) von Meßpunkten, die das aufgenommene Profil der Spulenseite bilden, entlang der vorbestimmten Richtung bestimmt, dass man das Profil der Spulenseite in (n) Abschnitte gleicher Länge teilt, wobei n < m ist, dass man für jeden Abschnitt maximale Werte ($h_{max}$) und minimale Werte ($h_{min}$) der Höhe h des Profils an den in diesem Abschnitt enthaltenen Meßpunkten bestimmt, und dass man für jeden Abschnitt ein Rechteck aufträgt, dessen Breite die Länge des Abschnitts darstellt und das vertikal durch die diesem Abschnitt entsprechenden Werte ($h_{max}$) und ($h_{min}$) begrenzt wird.

6. Verfahren nach einem der Ansprüche 1 bis 5, dadurch gekennzeichnet, daß man die Nullstärkenschwelle des Empfangssystems bestimmt und den Anfang bzw. das Ende der Messung des Profils erfaßt, die plötzlichen Schwankungen des Empfangssignalpegels nämlich einer Verstärkung des Signals ausgehend von der Nullstärkenschwelle bzw. einer Verringerung des Signals bis zur Nullstärkenschwelle entsprechen.

7. Verfahren nach einem der Ansprüche 1 bis 6, dadurch gekennzeichnet, daß man die Verstärkungen von mindestens t mm des gemessenen Abstands des Profils erfaßt und dass man das Vorhandensein von nicht nebeneinanderliegenden Windungen in der Spule ermittelt, wenn sich mindestens eine der Verstärkungen von mindestens t mm in einer Anzahl s von aufeinanderfolgenden Punkten des Profils wiederholt, die geringer ist als die Hälfte der Anzahl r von Meßpunkten pro Windung.

8. Vorrichtung zur Verwendung eines Verfahrens nach einem der vorhergehenden Ansprüche, dadurch gekennzeichnet, daß sie eine Einrichtung zum Aussenden eines optischen Strahls in Richtung der Seite der Spule, vorzugsweise parallel zu deren Achse, und eine Einrichtung zum Empfang des von der Spulenseite reflektierten optischen Strahls aufweist, dass die Achse des einfallenden optischen Strahls und die Achse des reflektierten optischen Strahls eine Triangulation bilden, dass Mittel zur Erzeugung einer Relativbewegung zwischen dem optischen Strahl und der Spule in einer parallel zu einem Durchmesser der Spulenseite verlaufenden Richtung vorgesehen sind, dass die Ebene der Triangulation senkrecht zu der parallelen Richtung verläuft und dass sie Mittel zum Umwandeln des reflektierten optischen Strahls in ein elektrisches Signal, das den Abstand zwischen den Meßpunkten auf der Spulenseite und einem vorbestimmten Bezugspunkt darstellt, aufweist.

9. Vorrichtung nach Anspruch 8, dadurch gekennzeichnet, daß die Aussendeeinrichtung so angeordnet ist, daß ihre Aussendeachse, die sich in der Durchmesserebene der Spule befindet, in ihre Verschiebungsrichtung ausgerichtet ist.

**Claims**

1. Method for measuring the profile of the side of a coil of strip, in which an incident optical beam is directed at the side of the said coil, relative motion between the coil and the said optical beam is created so that the said incident optical beam scans the said side of the coil over a diameter, and the distance between a plurality of points on the said side, which are distributed along the said diameter, and a predetermined reference position chosen along the said beam is measured, characterized in that the optical axis of the incident beam and the optical axis of the reflected beam constitute a triangulation, and in that the plane of this triangulation is perpendicular to the scanning direction.

2. Method according to Claim 1, characterized in that an incident optical beam parallel to the axis of the coil is directed at the side of the said coil.

3. Method according to one or other of Claims 1 and 2, characterized in that at least two distance measurements are taken on the side of each turn in the said coil.

4. Method according to one or other of Claims 1 to 3, characterized in that a parallelism defect between the axis of the coil and the axis of the incident optical beam is corrected by carrying out the following operations:

a) the profile of the side of the coil is recorded over the full diameter of the latter;

b) the position of each measurement point along the said diameter, relative to a predetermined origin, is recorded;

c) on the basis of the pair of measurements obtained at each point, namely the position p of the point and the height h of the profile at this point, the average slope of the curve of the profile is calculated along the scanning diameter:

d) the measured profile is corrected by means of the calculated average slope along the scanning diameter; and

e) a diametral profile whose average slope is zero is determined.

5. Method according to one or other of Claims 1 to 4, characterized in that the number (m) of measurement points constituting the profile of the side of the coil recorded along the said predetermined direction is determined, in that the said profile of the side of the coil is divided into (n) sections of equal length, with n < m, in that for each section maximum $(h_{max})$ and minimum $(h_{min})$ values of the height h of the profile at the measurement points contained in this section are determined, and in that for each section a rectangle is plotted whose width is representative of the length of the section and which is delimited vertically by the values $(h_{max})$ and $(h_{min})$ corresponding to the said section.

6. Method according to one or other of Claims 1 to 5, characterized in that the zero intensity threshold of the reception system is determined, and in that the start, respectively the end, of the measurement of the said profile corresponding to abrupt variations in the level of the reception signal, respectively an increase in the signal from the said zero intensity threshold and a decrease in the signal to the said zero intensity threshold are determined.

7. Method according to one or other of Claims 1 to 6, characterized in that the increases by at least t mm in the measured distance of the profile are detected, and in that the presence of noncontiguous turns in the said coil is determined when at least one of the said increases by at least t mm is repeated at a number s of successive points on the profile which is less than half the number r of measurement points per turn.

8. Device for implementing a method according to one or other of the preceding claims, characterized in that it comprises an instrument emitting an optical beam in the direction of the side of the coil, and preferably parallel to the axis of the latter, and an instrument receiving the optical beam reflected by the said side of the coil, in that the axis of the incident optical beam and the axis of the reflected optical beam form a triangulation, in that means are provided for creating relative motion between the said optical beam and the coil in a direction parallel to a diameter of the side of the coil, in that the plane of the said triangulation is perpendicular to the said parallel direction, and in that it comprises means for converting the said reflected optical beam into an electrical signal representative of the distance between the measurement points on the said side of the coil and a predetermined reference point.

9. Device according to Claim 8, characterized in that the said emitter instrument is arranged with its emission axis lying in the diametral plane of the coil which lies in the direction of movement of the latter.

Fig _ 1 .

EP 0 657 714 B1